# EUROPÄISCHE PATENTSCHRIFT

(11) **EP 4 402 440 B1**
(45) Veröffentlichungstag und Bekanntmachung des Hinweises auf die Patenterteilung: **22.04.2026**
(21) Anmeldenummer: 22786987.2
(22) Anmeldetag: 14.09.2022
(51) Int. Cl.: G01G 13/00, G01G 17/04

(54) **GRAVIMETRISCHE DOSIEREINHEIT FÜR FLIESSFÄHIGES SCHÜTTGUT**
GRAVIMETRIC DOSING UNIT FOR FLOWABLE BULK MATERIAL
UNITÉ DE DOSAGE GRAVIMÉTRIQUE POUR MATIÈRES EN VRAC FLUIDES

(30) Priorität: 15.09.2021 CH 0702742021
(43) Veröffentlichungstag der Anmeldung: 24.07.2024
(73) Patentinhaber: K-TRON Technologies, Inc., Sewell, NJ 08080 (US)
(72) Erfinder: BERNEGGER, Men, 8049 Zurich (CH); LEHMANN, Rolf, 5600 Ammerswil (CH); HELFENSTEIN, Urs, 5707 Seengen (CH)
(74) Vertreter: Ege Lee & Roider Patentanwälte
(86) Internationale Anmeldenummer: PCT/IB2022/058648
(87) Internationale Veröffentlichungsnummer: WO 2023/042085

(56) Entgegenhaltungen:
- EP-B1- 0 486 424
- WO-A1-2020/245183
- DE-A1- 19 947 516

## Beschreibung

Die vorliegende Erfindung betrifft eine gravimetrische Dosiereinheit nach dem Oberbegriff von Anspruch 1.

Die auch als Differentialdosierwaagen bekannten gravimetrische Dosierer sind weit verbreitet und werden in vielen Industriezweigen eingesetzt, für alle möglichen fliess- oder schüttfähigen Materialien, d.h. Schüttgüter, soweit diese überhaupt durch einen gravimetrischen Dosierer förderbar sind. Dabei werden die schüttfähigen Materialien in einen Behälter, von diesem in eine unter ihm liegende Basiseinheit und durch einen in der Basiseinheit vorhandenen Förderer dosiert aus dem Dosierer ausgegeben. Der Dosierer befindet sich auf einer Waage, somit ist das von der Waage registrierte Gewicht das Bruttogewicht, d.h. das bekannte und konstante Gewicht der Komponenten des Dosierers (Tara) plus das variable Gewicht des im Behälter und in der Basiseinheit aktuell vorhandenen Schüttguts (Nettogewicht).

Damit registriert die Waage im Betrieb des Dosierers laufend die Gewichtsabnahme des ganzen Dosierers, und damit wegen des konstanten Gewichts des Dosierers die Gewichtsabnahme des im Dosierer vorhandenen Schüttguts, so dass eine Steuerung des Dosierers aus der Gewichtsabnahme den ausgegebenen Ist-Massenstrom des schüttfähigen Materials bestimmen und im Vergleich mit einem vorbestimmten Soll-Massenstrom den Ausgabe-Förderer entsprechend regeln kann, um die Differenz zwischen dem Ist- und dem Soll-Massenstrom zu minimieren.

Dabei kann eine sehr genaue Regelung des ausgegebenen Massenstroms notwendig sein, etwa im Bereich der Pharmazie oder wenn in der industriellen Produktion Farbpigmente zugemischt werden sollen. Zudem kann der Soll-Massenstrom klein ausfallen, etwa bei den genannten Farbpigmenten und in der Medikamentenherstellung (z.B. einige wenige Kilos pro Stunde), oder gross, etwa im Bereich der Kunststoffherstellung und im Bergbau (z.B. mehr als 1 t pro Stunde), wobei auch bei solchen Förderleistungen eine präzise Dosierung notwendig sein kann.

Als Waagen werden häufig präzise Waagen aller Art eingesetzt, mit einer Auflösung über ihren Wägebereich von 1:100 000 und mehr, darunter auch solche mit Schwingsaitensensoren, wie sie etwa unter der Bezeichnung SFT-III, SFT-II-M und SFT-II-L von Coperion K-Tron bekannt sind.

Diese Waagen besitzen eine Auflösung von bis zu 1:4 000 000, so dass eine Präzisionsdosierung auch bei einem Behälterinhalt von mehreren hundert Kilos und einer Förderung von mehreren Tonnen pro Stunde problemlos erfolgen kann. Wird eine Auflösung von beispielsweise 1:1000 000 genutzt, kann bei einem Behälterinhalt von 100 kg der ausgegebene Massenstrom von 1 kg/s (3,6 t/h) immer noch auf 1/10 g genau erfasst und dann für die Dosierung verwendet werden. Bei kleinen Massenströmen kann dann der Massenstrom auf 1/100 g oder 1/1000 g genau erfasst werden.

Um die Präzision der Waagen für die Dosierung nutzbar zu machen, werden bevorzugt nicht vertikale, also horizontale oder schräg angeordnete Förderer eingesetzt, da so das fluiddynamische Verhalten des Schüttguts etwas besser beherrscht werden kann, da unter anderem bei horizontalen Förderern die Gravitation nicht in Förderrichtung wirkt und so nicht stört. Als horizontale Förderer eigenen sich längere Schneckenförderer gut, da über deren Drehzahl recht einfach und verzugslos die Ist-Fördermenge variiert werden kann und die Distanz vom Massenstrom aus dem Trichter bis zu einem ausserhalb der Dosiereinheit liegenden Sammelbehälter gut überbrückt werden kann, ohne dass sich im Ist-Massenstrom selbst Nachteile ergeben. Der Prospekt K4G-L Group, K-Tron Product Information, K4G Continuous Gravimetric Blender zeigt eine Anordnung von gravimetrischen Dosiereinheiten mit verschiedenen Trichtervolumina und Präzisionswaagen, die nach Bedarf bei verschiedenen Fördermengen eine hochpräzise Förderung erlauben.

Je nach den geförderten Schüttgütern ist regelmässige Wartung, vor allem die Reinigung der Basiseinheit der Dosierer, dort des Förderers wie einer Förderschnecke, essentiell.

Die WO 2006/010 475 zeigt eine Dosiereinheit mit einem Dosierer für Schüttgüter und einem Rahmen für den Dosierer, der eine vertikale, kurze Schnecke aufweist. Der Dosierer ist auf einem plattenförmigen Fortsatz des Rahmens montiert, wobei der Rahmen bzw. der Fortsatz einerseits den Schüttgutbehälter und andererseits über eine an ihm angeordnete vertikale Führungsstange die Basiseinheit des Dosierers trägt. Die Basiseinheit ist der Führungsstange entlang absenkbar und verdrehbar angeordnet und kann so gewartet werden, ohne dass sie vollständig vom Dosierer getrennt und von diesem weggenommen werden muss.

Die EP 0 486 424 B1 offenbart eine Vorrichtung zum gravimetrischen Dosieren von Schüttgütern, mit mindestens einer Dosierschnecke mit einem Antrieb und einem oberhalb der Dosierschnecke angeordneten Rührwerk mit einem separaten Antrieb.

Weiter wird allgemein offenbart, dass die gezeigte Anordnung für gravimetrische Dosierung auch auf eine Waage gestellt werden könne, wobei offenbleibt, wie. Zudem ist die gezeigte Anordnung für längere Förderschnecken oder insbesondere für horizontale Förderschnecken nicht einsetzbar.

Es ist die Aufgabe der vorliegenden Erfindung, eine Dosiereinheit mit Präzisionswaagen und nicht vertikal, bevorzugt horizontal angeordnetem Förderer derart weiterzubilden, dass die Basiseinheit für die Wartung erleichtert zugänglich ist.

Diese Aufgabe wird gelöst durch die kennzeichnenden Merkmale von Anspruch 1.

Dadurch, dass der Dosierer am Rahmen über seinen Behälter aufgehängt und die Schiene wiederum am Behälter selbst angeordnet ist, erübrigt sich eine aufwendige, doppelte Aufhängung, die einerseits den Behälter und andererseits die Basiseinheit trägt, dabei aber als Ganzes für die Erfassung des Gewichst von beiden, des Behälters und des Dosierers, auf der Waage ruht.

Über die gestellte Aufgabe hinaus ermöglicht die Begrenzungsanordnung nach den Merkmalen von Anspruch 2, dass auch eine vereinfachte, kostengünstige Aufhängung verwendet werden kann, die nur auf Beanspruchung in Richtung der Gewichtskraft, nicht aber auf Beanspruchung durch die bei der Wartung entstehenden in allen Richtungen wirkenden Kräfte ausgelegt ist.

Die Erfindung wird nachstehend anhand der Figuren näher beschrieben.

Es zeigt:
Figur 1a und 1b schematisch eine Ausführungsform der Erfindung,
Figur 2a und 2b schematisch eine weitere Ausführungsform der Erfindung,
Figur 3a bis 3c eine Ansicht auf eine weitere Ausführungsform der Erfindung,
Figur 3d eine dreidimensionale Teilansicht auf die Ausführungsform gemäss den Figuren 3a bis c, und
Figuren 4 und 5 eine dreidimensionale Detailansicht auf zwei Ausführungsformen der Parallelarme einer Parallelführung für den Behälter des Dosierers.

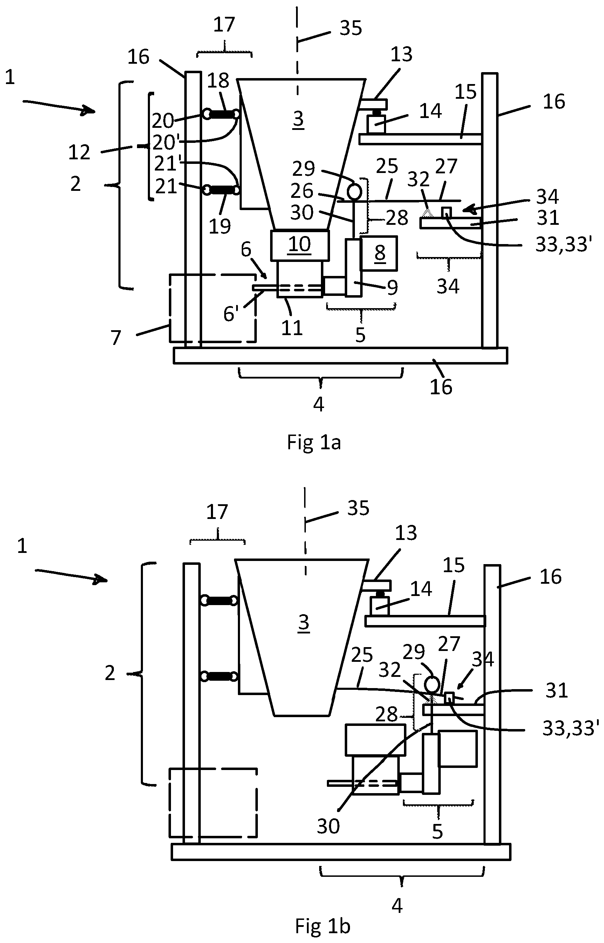

Figur 1a zeigt eine erfindungsgemässe Dosiereinheit 1 mit einem Dosierer 2, der einen hier trichterförmigen Behälter 3 für Schüttgut und eine Basiseinheit 4 aufweist. Die Basiseinheit 4 wiederum besitzt einem Antrieb 5 und einen durch diesen angetriebenen, horizontal ausgerichteten Förderer mit einer Förderschnecke 6, wobei der Förderer in einem gestrichelt angedeuteten Sammler 7 endet. Weiter weist der Antrieb 5 einen Motor 8 und ein Getriebe 9 auf, mit welchem der Förderer verbunden ist. Eine Steuerung für den Motor 8 und damit der Drehzahl der Förderschnecke 6 ist dem Fachmann bekannt und zur Entlastung der Figur weggelassen. In der gezeigten Ausführungsform ist weiter ein Übergangstrichter 10 zu einem Förderbehälter 11 vorgesehen, in welchem die Förderschnecke 6, soweit sie in diesem verläuft, gestrichelt eingezeichnet ist. Es sei angemerkt, dass zwar die Förderschnecke 6 für horizontale Förderung verbreitet ist, dem Fachmann sind aber anders ausgebildete, nicht vertikale geeignete Förderer ebenfalls bekannt.

Im Betrieb wird Schüttgut in den Behälter 3 gefüllt, welches aus diesem über den Übergangstrichter 10 in den Förderbehälter 11 fällt und dort von der in einem Förderrohr 6' laufenden Förderschnecke 6 nach links in den Sammler 7 befördert wird.

Eine Aufhängung 12 stützt den Dosierer 2 auf seiner rechten Seite über einen Ausleger 13 auf einer Waage 14 ab, die wiederum auf einem geeignet ausgebildeten Auflager 15 des Rahmens 16 ruht. Die Aufhängung 12 trägt den Dosierer 2 auf seiner linken Seite über eine Parallelführung 17, die in der gezeigten Ausführungsform einen oberen Parallelarm 18 und einen unteren Parallelarm 19 aufweist, wobei die Parallelarme 18,19 mit endseitigen Gelenken 20,20' und 21,21' versehen und damit derart mit dem Rahmen 16 und dem Behälter 3 verbunden sind, dass dieser gegenüber dem Rahmen 16 in vertikaler Richtung beweglich aufgehängt ist.

Es ergibt sich eine gravimetrische Dosiereinheit, mit dem Rahmen 16, dem Dosierer 2 und der Aufhängung 12, bei welcher bevorzugt die Aufhängung eine Parallelführung 17 aufweist, die einerseits mit dem Rahmen 16 und andererseits mit dem Behälter 3 des Dosierers 2 verbunden ist, derart, dass der Behälter 3 gegenüber dem Rahmen 16 vertikal bewegbar aufgehängt ist.

Die (wie oben erwähnt) zur Entlastung der Figur weggelassene Steuerung kann aus dem Wägesignal der Waage 14 und der Geometrie der gezeigten Anordnung das Gewicht des Dosierers 2 im gravimetrischen Betrieb laufend bestimmen und so den Motor 8 für eine exakte Dosierung durch die Förderschnecke 6 ansteuern. Durch die vertikale Beweglichkeit der Parallelführung 17 ist der Behälter 3 und damit der Dosierer 2 in vertikaler Richtung frei von Einflüssen des Rahmens, so dass die Waage 14 das tatsächliche Gewicht des Dosierers 2 ermitteln kann. Es sei angemerkt, dass je nach der verwendeten Waage 14 die notwendige vertikale Verschiebbarkeit durch die Parallelführung 17 auch nur sehr klein sein kann, insbesondere, wenn die Waage 14 als Schwingsaitenwaage ausgebildet ist. Dennoch muss der Dosierer 2 in einem der verwendeten Waage entsprechenden vertikalen Intervall im Hinblick auf Vertikalkräfte vom Rahmen 16 entkoppelt sein, um richtige Wägung und damit präzise Dosierung durch die Dosiereinheit 1 sicher zu stellen.

In der Figur ist weiter eine Schiene 25 ersichtlich, die an ihrem inneren Endbereich 26 am Behälter 3 festgelegt ist und mit dem anderen, äusseren Endbereich 27 freischwebend angeordnet, aber bevorzugt federelastisch nach unten auslenkbar ist.

Auf der Schiene 25 läuft ein Tragwerk 28, mit einem Laufelement 29 und einem Mast 30, an dem die Basiseinheit 4 hängt, so dass diese an der Schiene 25 über deren Länge hin- und her bewegt werden kann, in der Figur 1a nach links zum Behälter 3 in ihre Betriebsposition (d.h. mit dem Behälter 3 für gravimetrische Dosierung betriebsfähig verbunden) und nach rechts, von ihm weg, in ihre Wartungsposition (d.h. vom Behälter 3 gelöst und für die Wartungsarbeiten zugänglich).

Unter dem äusseren Endbereich 27 der Schiene 25 befindet sich ein am Rahmen angeordnetes zweites Auflager 31, auf dem ein Stützlager 32 für den äusseren Endbereich 27 der Schiene 25 angeordnet ist. Weiter sind am zweiten Auflager 31 seitliche Begrenzungsanschläge 33,33' einer Begrenzungsanordnung 34 vorgesehen (s. dazu Figur 1b). Der Begrenzungsanschlag 33' ist in der Figur durch den Begrenzungsanschlag 33 verdeckt.

Figur 1b zeigt die Ausführungsform von Figur 1a, wobei die Basiseinheit 4 in ihre Wartungsposition verfahren worden ist. Ihr Gewicht liegt jetzt auf dem äusseren Endbereich 27 der Schiene 25, die sich, da bevorzugt diesem Gewicht entsprechend vertikal federelastisch ausgebildet, abgesenkt hat, soweit, bis der Endbereich 27 auf der Stütze 32 anschlägt und auf dieser aufliegt. Der äussere Endbereich 27 ist dann zugleich zwischen die seitlichen Begrenzungsanschlägen 33,33' eingefahren und liegt in horizontaler Richtung zwischen diesen mit einer vorbestimmten Toleranz fest. Diese Toleranz ist durch die Aufhängung 12 vorgegeben: wird die Basiseinheit 4 in Wartungsposition manipuliert, wirkt die Schiene 25 als Hebel, der alle durch die Manipulation entstehenden Kräfte auf den Behälter 3 und von diesem auf die Aufhängung 12 überträgt, welche diese Kräfte aufnehmen muss. So verdrehen horizontal wirkende Kraftkomponenten den Behälter 3 um seine vertikale Achse 35. Die Toleranz in der Begrenzungsanordnung 34 lässt eine zulässige Verdrehung zu, und verhindert eine weitere, nicht mehr zulässige Verdrehung.

Eine aufwendige Verstärkung der Aufhängung 12 im Hinblick auf horizontal wirkende Kraftkomponenten, welche den Behälter 3 um seine Achse 35 verdrehen, entfällt, umgekehrt wird eine vereinfachte, kostengünstige Aufhängung 12 möglich.

Im Ergebnis ist der äussere Endbereich 27 durch den Rahmen gestützt, d.h. das Gewicht der Basiseinheit 4 wird vom Rahmen getragen, und die seitlich wirkenden, durch die Wartung entstehenden Kräfte werden ebenso über die Begrenzungsanschläge 33,33' vom Rahmen 16 aufgenommen. Eine Verdrehung des Behälters 3 um seine vertikale Achse 35 ist damit verhindert, oder, je nach der Ausbildung der Begrenzungsanordnung 34, auf einen vorbestimmten Wert begrenzt. Dadurch kann die Aufhängung 12 vereinfacht nur auf die Gewichtskräfte des Dosierers 2 ausgelegt werden, und der Aufwand für die Aufnahme von in der Horizontalen wirkenden Kräften oder Momente auf Grund der Wartung der Basiseinheit 4 entfällt.

Damit ist die Basiseinheit 4 in ihrer Wartungsposition am Rahmen 16 gelagert, in der Betriebsposition mit freischwebender Schiene 27 (Figur 1a) jedoch von diesem vollständig abgekoppelt, so dass dann der Rahmen 16 keine Kräfte auf sie ausüben kann, welche die Wägung der Basiseinheit 4 durch die Waage 14 verfälschen können.

Es ergibt sich, dass bevorzugt die Schiene 25 in vertikaler Richtung federelastisch ausgebildet und am Rahmen 16 ein Stützlager 32 vorgesehen ist, auf dem die Schiene 25 bei nach unten gerichteter federelastischer Auslenkung aufliegt, derart, dass die Schiene 25 auf der Stütze 32 aufliegt, wenn sich die Basiseinheit 4 in der Wartungsposition befindet, aber auf der Stütze 32 nicht aufliegt, wenn sich die Basiseinheit 4 in Betriebsposition befindet. Weiter ist bevorzugt am Rahmen 16 eine Begrenzungsanordnung 34 vorgesehen, die eine Verdrehung des Behälters 3 gegenüber dem Rahmen 16 um eine vertikale Achse 35 begrenzt. Dabei weist weiter bevorzugt die Begrenzungsanordnung (34) mit dem Rahmen (16) verbundene Anschläge (33,33') auf, die mit der Schiene (25) zusammenwirken.

Es sei an dieser Stelle aber angemerkt, dass auch die Parallelführung 17 und/oder der Aufleger für die Waage massiv genug ausgebildet werden können, um alle während der Wartung auf die Schiene wirkenden Kräfte aufzunehmen - dann erübrigen sich die vertikal federelastische Ausbildung der Schiene sowie der Aufwand für eine Begrenzungsanordnung. Es verbleibt dann der Vorteil der einfachen Konstruktion der Aufhängung selbst, die nur am Behälter 3 angreift, in Verbindung mit der am Behälter angeordneten Schiene, die nicht mehr am Rahmen abgestützt sein muss und so während dem gravimetrischen Betrieb die vollständige Entkoppelung des Dosierers vom Rahmen wenigstens in Richtung der Gewichtskraft sicherstellt.

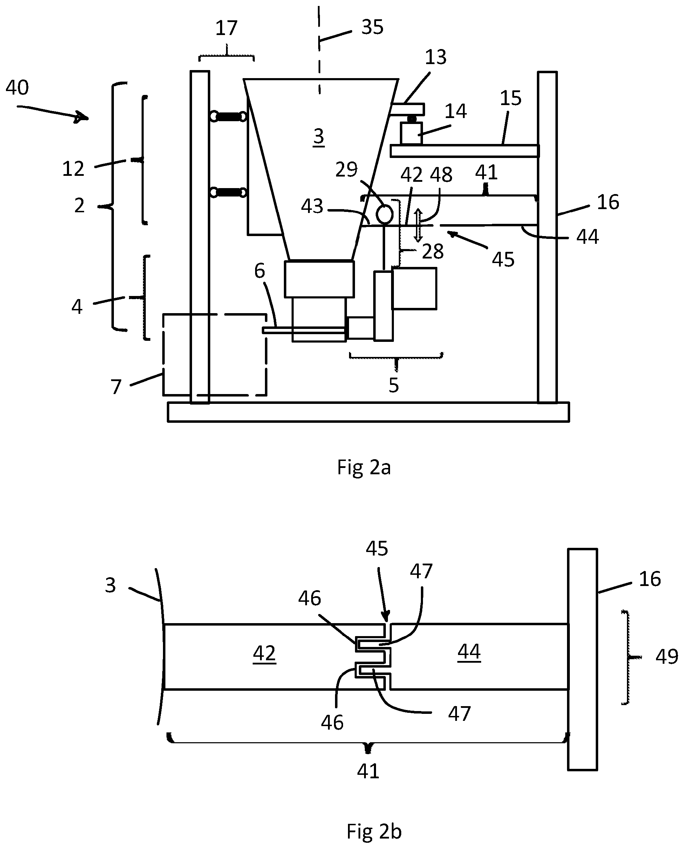

Figur 2a zeigt eine Dosiereinheit 40 gemäss einer weiteren Ausführungsform mit einer modifizierten Schiene 41, die mehrteilig ausgebildet ist. Ein behälterseitiger Teil 42 der Schiene 41 ist mit seinem einen Ende 43 am Behälter festgelegt und erstreckt sich vorzugsweise horizontal vom Behälter 3 weg. Ein ebenfalls vorzugsweise horizontal ausgerichteter rahmenseitiger Teil 44 der Schiene 41 ist am Rahmen 16 festgelegt. Beide Teile 42,44 der Schiene 41 fluchten miteinander, zwischen ihnen liegt aber ein Zwischenraum 45, durch den der Behälter 3 vom Rahmen entkoppelt ist, der aber derart ausgebildet ist, dass er vom Laufelement 29 des Tragwerks 28 überfahren werden kann.

In der in Figur 2a dargestellten Betriebsposition der Basiseinheit 4 liegt diese auf dem inneren Teil 42 der Schiene 41 auf und ist mit dem Behälter 3 verbunden, die Waage 14 erfasst das volle Gewicht des Dosierers 2. Durch die Lücke 45 ist dabei der innere Teil 42 vom Rahmen 16 abgekoppelt, das Gewicht verfälschende, durch den Rahmen ausgeübte Kräfte sind nicht vorhanden. Der Behälter ist im Betrieb der Dosiereinheit aufgrund des sich ändernden Gewichts des Dosierers 2 in Richtung des Doppelpfeils 48 frei beweglich, wobei diese von der Waage 14 während dem Wägevorgang generierte Bewegung von der Aufhängung 12 bzw. der Parallelführung 17 zugelassen und wird - so wie dies auch bei der Ausführungsform nach Figur 1a der Fall ist, wenn der äussere Endbereich 27 der Schiene 25 freischwebt.

In der Wartungsposition liegt das Tragwerk 28 mit dem Laufelement 29 auf dem äusseren Teil 44 der Schiene 41 auf, der mit dem Rahmen fest verbunden ist und wird deshalb vom Rahmen 16 gelagert, wobei auf die Basiseinheit wirkende Manipulationskräfte wegen der Lücke 45 nicht auf den Behälter 3 übertragen werden können, so dass dessen Aufhängung wiederum von der entsprechenden Beanspruchung geschützt ist und vereinfacht nur auf die Gewichtskräfte des gravimetrischen Betriebs ausgelegt werden kann.

Es ergibt sich bevorzugt, dass die Schiene 41 mehrteilig ausgebildet ist, wobei ein behälterseitiger Teil 42 mit dem Behälter 3 und ein rahmenseitiger Teil 44 mit dem Rahmen 16 verbunden ist, und wobei die Teile 42,44 der Schiene 41 zueinander relativ bewegbar miteinander fluchten, derart, dass das Tragwerk 28 über einen Zwischenraum 45 zwischen den fluchtenden Enden bewegt werden kann.

Figur 2b zeigt eine Ansicht der Schiene 41 von oben, in einer weiteren, gegenüber Figur 2a modifizierten Ausführungsform. Ersichtlich ist ein Ausschnitt des Behälters 3, am dem der innere Teil 42 der Schiene 41 festgelegt ist, sowie ein Ausschnitt des Rahmens 16, an dem der äussere Teil 44 der Schiene 41 festgelegt ist. Beide Teile 42,44 fluchten, wobei der Zwischenraum 45 zwischen den einander zugewendeten und gegengleich geformten Enden 46,47 der Teile 42,44 gebildet ist. In der gezeigten Ausführungsform sind am Teil 42 rechteckige Ausnehmungen 46 vorgesehen, in welche rechteckige Vorsprünge 47 des Teils 44 hineinragen. Diese Ausbildung erlaubt über den Zwischenraum 45, dass sich der behälterseitige Teil 42 gegenüber dem rahmenseitigen Teil 44 in Richtung des Doppelpfeils 48 (Figur 2a) frei bewegen kann (der Behälter 3 also vom Rahmen entkoppelt ist) obschon der Zwischenraum 45 derart ausgebildet ist, dass er vom Tragwerk 28 bzw. dem Laufelement 29 leicht überfahren werden kann.

Weiter besitzt diese Ausführungsform den Vorteil, dass eine Verdrehung des Behälters 3 in der Aufhängung 12, z. B. schon dann, wenn die Basiseinheit 4 aus ihrer Betriebsposition gelöst wird, begrenzt ist, da dann die miteinander zusammenwirkenden Ausnehmungen 46 und Vorsprünge 47 seitlich aneinander anschlagen. Die Vorsprünge 47 bzw. Ausnehmungen 46 stellen deshalb Seitenanschläge einer Begrenzungsanordnung 49 dar und wirken analog zu den Anschlägen 33,33' gemäss Figur 1a und b.

Es sei angemerkt, dass der Fachmann den Zwischenraum 45 bzw. die Paarung von Vorsprüngen/Ausnehmungen im konkreten Fall beliebig ausbilden kann, um entsprechend der konkreten Ausbildung der Aufhängung 12 und des Laufwerks 28 die erfindungsgemässe Wirkung zu erzielen.

Es ergibt sich weiter bevorzugt, dass die Begrenzungsanordnung 32 seitliche, miteinander zusammenwirkende Anschläge an den fluchtenden Enden der der Schiene 41 aufweist, bevorzugt wechselweise ineinandergreifende Vorsprünge 47 und Ausnehmungen 46.

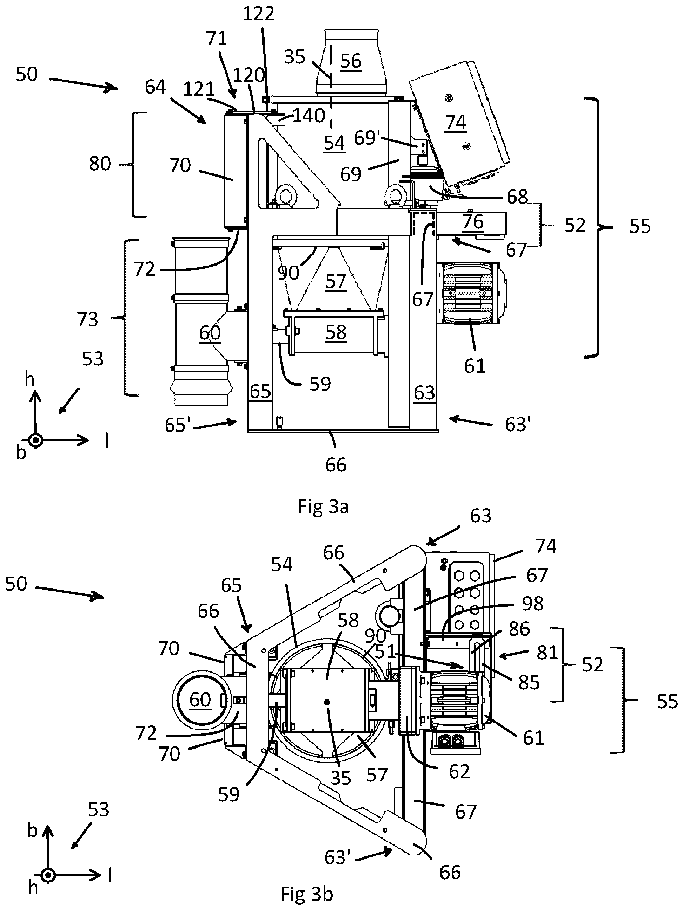

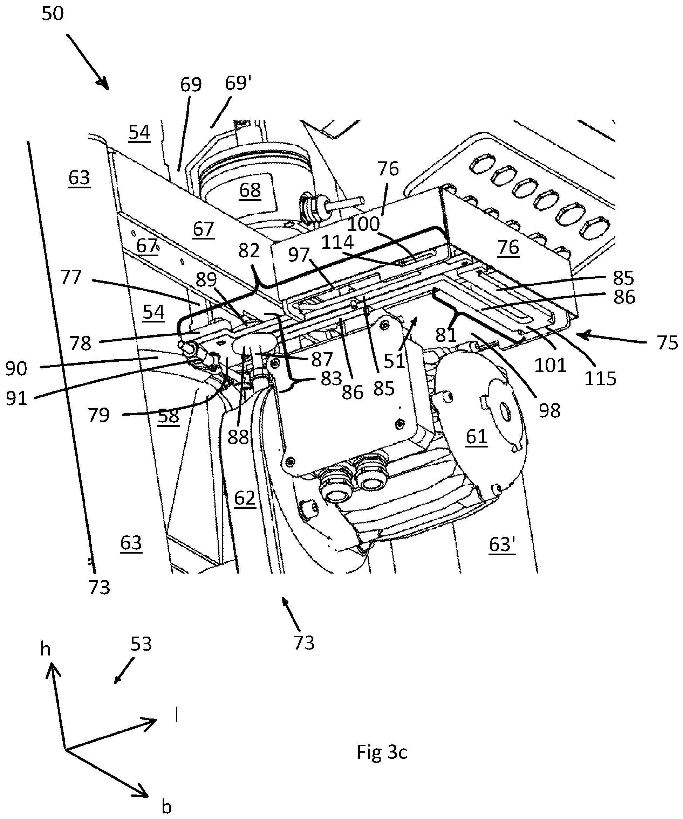

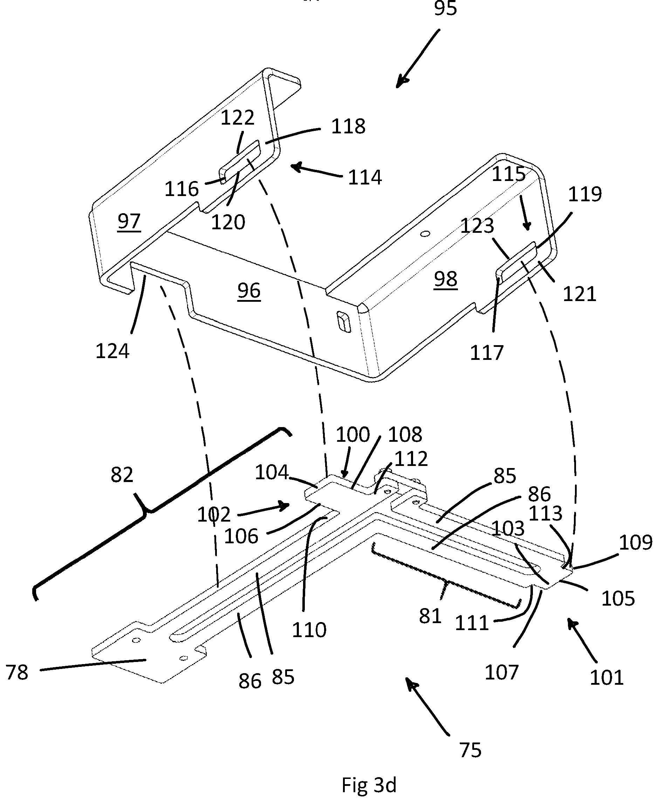

Die Figuren 3a bis c zeigen eine Dosiereinheit 50 in einer seitlichen Ansicht (Figur 3a), einer Ansicht von unten (Figur 3b) und einem dreidimensionalen Ausschnitt von schräg unten auf die Schiene 51 und die Begrenzungsanordnung 52 der Dosiereinheit 50 (Figur 3c). In jeder Figur zeigt ein Koordinatensystem 53 die Höhe h, Länge I und Breite b der Dosiereinheit 50. In Figur 3d ist in der Art einer Explosionszeichnung die Schiene 75 mit der Begrenzungsanordnung 52 der Dosiereinheit 50 detaillierter dargestellt.

Figur 3a zeigt in seitlicher Ansicht eine Dosiereinheit 50, mit einem zylindrisch ausgebildeten Behälter 54 für Schüttgut eines Dosierers 55, der einen Anschlussstutzen 56 für nachzufüllendes Schüttgut, einen Übergangstrichter 57 und einen Förderbehälter 58 (in dem ein nicht sichtbarer horizontaler Schneckenförderer läuft) aufweist, wobei ein Förderrohr 59, durch das sich der Schneckenförderer weiter erstreckt, vom Förderbehälter 58 nach links in ein vertikales Übergangsrohr 60 mündet, aus welchem das dosierte Schüttgut nach unten ausgegeben wird. Ein Motor 61 treibt die Förderschnecke an, wobei das Getriebe 62 (s. Figur 3b) zwischen ihm und der Förderschnecke (das dem Getriebe 9 von Figur 1a entspricht) durch einen äusseren Vertikalträger 63 des Rahmens 64 der Dosiereinheit 50 verdeckt ist. Der Motor 61, das Getriebe 62, der Übergangstrichter 57, der Förderbehälter 58, das Förderrohr 59 und das Übergangsrohr 60 bilden in der gezeigten Ausführungsform die Basiseinheit 73 des Dosierers 55.

Der äussere Vertikalträger 63 verdeckt einen zweiten, hinter ihm liegenden äusseren Vertikalträger 63', ebenso verdeckt ein innerer Vertikalträger 65 des Rahmens 64 einen hinter ihm liegenden inneren Vertikalträger 65'. Die Vertikalträger 63,63',65,65' stehen auf einem Grundblech 66, und tragen unter Anderem einen äusseren und oberen Querträger 67, der in Figur 3a vom äusseren Vertikalträger 63 zwar verdeckt ist, aber zur verbesserten Übersicht gestrichelt eingetragen ist. Der Querträger 67 ist im Querschnitt als umgekehrtes U ausgebildet und in Figur 3b von unten sichtbar.

Der Querträger 67 dient als Auflager für eine Waage 68, auf der sich der Behälter 67 über ein vertikales, mit einem Ausleger 69' versehenes Trägerelement 69 (das dem Ausleger 13 von Figur 1a entspricht) abstützt. Das Trägerelement 69 ist Bestandteil der Aufhängung 80.

Auf der gegenüberliegenden, inneren Seite der Dosiereinheit 50 ist ein vertikaler Rahmenabschnitt 70 der Aufhängung 80 ersichtlich, an dem ein oberer Parallelarm 71 und ein unterer Parallelarm 72 angeordnet sind, die wiederum den Behälter 54 vertikal verschiebbar tragen, soweit dies durch die Bewegung der Waage 68 beim Wägevorgang notwendig ist. Eine Steuerung 74 ist hier an der Dosiereinheit 50 selbst angeordnet und steuert den dem Fachmann grundsätzlich bekannten Dosiervorgang auf konventionelle Weise.

Figur 3b zeigt die Dosiereinheit 50 von unten, wobei die Waage 68 durch den Querträger 67 verdeckt ist. Ersichtlich ist die trapezförmige Kontur des Rahmens 64, mit einer Schmalseite am Ort des Übergangsrohrs 60 und der breiten Seite an der Aussenseite, wo auch die Steuerung angeordnet ist. Diese Anordnung erlaubt, eine Gruppe von hier sechs Dosiereinheiten 50 als Sechseck um einen gemeinsamen, in der Figur nicht gezeigten Sammler herum anzuordnen.

Weiter ersichtlich ist ein zweiter Abschnitt 81 einer weiteren Ausführungsform einer Schiene 75 (Figur 3c und 3d) sowie ein zweiter Seitenabschnitt 98 eines entsprechend ausgebildeten Begrenzungsträgers 95 (Figuren 3c und 3d) einer Begrenzungsanordnung 52, der eine Verdrehung des Behälters 54 um seine vertikale Achse 35 begrenzt.

Figur 3c zeigt einen Ausschnitt der Dosiereinheit 50 in dreidimensionaler Ansicht, schräg von unten, mit einem Blick auf die vom Behälter 54 wegragende Schiene 75, die von einer am Querträger 67 angeordneten Schutzummantelung 76 umgeben ist. Wie oben erwähnt ist der Querträger 67 ist im Querschnitt als umgekehrtes U ausgebildet und mit der geschlossenen Seite gegen oben an den Vertikalträgern 63,63' angeordnet und trägt die Waage 68, wobei diese wiederum über den Stützarm 69' das vertikale Trägerelement 69 und damit den Behälter 54 trägt (s. dazu auch Figur 3a).

Ein nach unten laufender Trägerabschnitt 77 des Trägerelements 69 endet in einer horizontal ausgerichteten Verbindungsplatte 78, an welcher wiederum ein Montagekopf 79 der Schiene 75 befestigt ist, so dass die Schiene 75 am Trägerelement 69 (und damit am Behälter 54) festgelegt ist. Die Schiene 75 ist in Figur 3d noch im Detail dargestellt.

Die Schiene 75 besitzt in der gezeigten Ausführungsform einen ersten, sich vom Behälter 54 weg erstreckenden Abschnitt 82 und einen an diesen anschliessenden und zu diesem abgewinkelten zweiten Abschnitt 81. Weiter ist die Schiene 75 in der gezeigten Ausführungsform als Doppelschiene ausgebildet, mit zwei seitlich nebeneinander verlaufenden Einzelschienen 85 und 86, die im Abstand zueinander angeordnet sind und so eine Lücke bilden, durch die der Mast 87 ragt, an dem die Basiseinheit 73 (s. auch Fig 3a) aufgehängt ist.

Das Tragwerk 83 für die Basiseinheit 73 weist neben dem Mast 87 ein als untere 85 und obere Gleitscheibe 86 ausgebildetes Laufelement auf. Sind die Klemmscheiben oder Gleitscheiben 88 und 89 gegeneinander verspannt, fixieren sie die Basiseinheit 73 an der Schiene 75, in der Figur 3c in ihrer Betriebsposition. Sind die Gleitscheiben 88,89 von einander gelöst, lässt sich die Basiseinheit 73 über den Mast 87 der Lücke zwischen den Einzelschienen 85,86 entlang verschieben.

Die Basiseinheit 73 gelangt in die Wartungsposition, indem ein Spannring 90, der den Übergangstrichter 58 mit dem Behälter 54 verbindet, über seine Spannschraube 91 gelöst wird, so dass sie nur noch von ihrem Tragwerk 83 getragen in der Schiene 75 hängt. Dann kann die Basiseinheit 73 mit den gelösten Gleitscheiben 88,89 vom Behälter 54 weggezogen werden, solange, bis der Schneckenförderer aus dem Übergangsrohr 60 hinausgezogen ist, was in der Regel der Fall ist, wenn sich das Tragwerk 83 bzw. der Mast 87 in einem äusseren Bereich des ersten Abschnitts 82 der Schiene 75 befindet. Dort kann die Basiseinheit 73 im Gegenuhrzeigersinn um die Achse des Masts 87 verdreht und gleichzeitig dem zweiten Abschnitt 81 entlang geschoben werden, bis der Schneckenförderer parallel zum Querträger 67, und ausserhalb diesem, liegt. Vorteilhaft an dieser Ausbildung der Schiene 75 ist unter Anderem, dass die Basiseinheit 73 nicht über die ganze Länge des Schneckenförderers in gerader Linie vom Behälter 54 weggezogen werden muss, was Platz spart und in der konkreten Linie unter dem Gesichtspunkt der Wartung engere Platzverhältnisse erlaubt.

Dazu ist bevorzugt das Tragwerk 83 derart ausgebildet, dass es eine Verdrehung der Basiseinheit 73 gegenüber der Schiene 75 erlaubt. In der gezeigten Ausführungsform ist dies einfach möglich, da bei gegeneinander gelösten Gleitscheiben 88,89 der Mast 87 in der Lücke zwischen den Einzelschienen 85,86 jederzeit beliebig, der Lage der Förderschnecke entsprechend, verdreht werden kann. Weiter bevorzugt weist dabei das Tragwerk 83 einen zwischen den Einzelschienen 85,86 hindurchragenden Mast 87 und noch weiter bevorzugt eine auf den Einzelschienen 85,86 aufliegende Scheibe 89 auf, die als Gleitscheibe ausgebildet ist.

In Figur 3d zeigt in der Art einer Explosionszeichnung die Schiene 75 sowie einen Begrenzungsträger 95, der die Schiene 75 in montiertem Zustand umfasst, wie dies in der Figur 3c dargestellt ist.

Neben der Verbindungsplatte 78, mit der die Schiene 75 am sich nach unten erstreckenden Trägerabschnitt 77, und damit am Behälter 54 befestigt ist (s. Figur 3c), weist sie weiter einen ersten Begrenzungsnocken 100, der am Ende ihres ersten Abschnitts 82 nach aussen ragt, und einen zweiten Begrenzungsnocken 101 auf, der in der gezeigten Ausführungsform am Ende des zweiten Abschnitts 81 stirnseitig von diesem weg ragt.

Beide Begrenzungsnocken 100,101 besitzen je einen rechteckigen Umriss, eine Unterseite 102, 103, eine gegenüberliegende, in der Figur von den Unterseiten 102,103 verdeckte Oberseite, eine Stirnseite 104,105 sowie eine linke Seite 106,107 und rechte Seite 108,109, wobei an die linke 106,107 und rechte Seite ein linker Schulterbereich 110,111 und ein rechter Schulterbereich 112,113 angrenzen.

Der Begrenzungsträger 95 weist einen Montageabschnitt 96 auf, der am Querträger 67 des Rahmens 64 fixiert ist, sowie einen ersten Seitenabschnitt 97 und einen zweiten Seitenabschnitt 98, in denen eine erste Begrenzungsöffnung 114 sowie eine zweite Begrenzungsöffnung 115 vorgesehen sind. Die Begrenzungsöffnungen 114,115 werden gebildet durch innere 116,117 und äussere Begrenzungsränder 118,119 sowie untere 120,121 und obere Begrenzungsränder 122, 123. Weiter ist im Montageabschnitt 96 eine Ausnehmung 124 vorgesehen, die den Durchtritt des ersten Abschnitts 82 der Schiene 75 erlaubt.

Im zusammengebauten Zustand liegt die Schiene 75 derart im Begrenzungsträger 95, dass der Begrenzungsnocken 100 durch die Begrenzungsöffnung 114 und der Begrenzungsnocken 101 durch die Begrenzungsöffnung 115 ragt, dabei aber weder mit den Schulterbereichen 110,112 und 111,113 noch mit den linken 106,107 oder rechten Seiten 108,109 oder mit den Unterseiten 102,103 bzw. den gegenüberliegenden Oberseiten Kontakt mit den entsprechenden Begrenzungsrändern der Begrenzungsöffnungen 114,115 hat. Zugleich ragt der erste Abschnitt 82 der Schiene 75 durch die Ausnehmung 124, so dass der Montageabschnitt 78 hinter dem Montageabschnitt 96 und hinter dem Querträger 67 liegt, wo er am vertikalen Trägerabschnitt 77 fixiert ist.

Mit anderen Worten ragen die Begrenzungsnocken 100,101 der Schiene 75 frei und ohne anzuschlagen durch die Begrenzungsöffnungen 114,115, solange keine Kräfte auf die Schiene 75 wirken, d.h. sich die Basiseinheit 73 in Betriebsposition befindet und keiner unerwünschten Krafteinwirkung ausgesetzt ist, wie dies auch in Fig. 3c dargestellt ist.

Anders, wenn die Basiseinheit 73 von der Betriebsposition weg, dem ersten Abschnitt 82 der Schiene 75 entlang nach aussen bewegt wird: dann senkt sich die vertikal elastisch ausgebildete Schiene 75 nach unten (Prinzip gemäss Figur 1a), bis die Unterseiten 102, 103 ihrer Begrenzungsnocken 100,101 an den unteren Begrenzungsrändern 120,121 der Begrenzungsöffnungen 114,115 anschlagen, womit der Begrenzungsträger 95 und über diesen der Querträger 67 das Gewicht der Basiseinheit 73 übernimmt - die Schiene 75 ist dann mit dem Rahmen 64 über die Gewichtskraft der Basiseinheit 73 gekoppelt.

Ebenfalls anders, wenn auf die Basiseinheit 73, eine horizontal wirkende Kraft ausgeübt wird, die den Behälter 54 um seine Achse 35 zu verdrehen droht: die Schiene 75 schlägt dann mit den linken 110,111 oder rechten 112 Schulterbereichen an den entsprechenden Rändern der Begrenzungsöffnung 114,115 an, so dass diese Kraft wiederum vom Begrenzungsträger 95 bzw. dem Rahmen 64 aufgenommen wird und damit die Aufhängung 80 der Dosiereinheit 50 nur im vorgesehenen Mass beansprucht wird.

Analog für alle weiteren auf die Basiseinheit wirkenden Kräfte: verschiebt sich dadurch die Schiene 75 in irgendeiner Richtung, schlägt sie mit den Begrenzungsnocken 100,101 an den entsprechenden Rändern 116 bis 123 der Öffnungen 114,115 an, so dass diese Kräfte über den Begrenzungsträger 95, damit in den Querträger 67, d.h. den Rahmen 64, eingeleitet werden und die Aufhängung 80 nicht übermässig beanspruchen können.

Daraus ergibt sich, dass der Zwischenraum zwischen den Begrenzungsnocken 100,101 und den Begrenzungsöffnungen 114,115 nur so gross bemessen wird, dass die Aufhängung 80 eine Bewegung der Schiene 75 bis zum Kontakt der Begrenzungsnocken 100,101 mit den Begrenzungsöffnungen 114,115 schadlos erträgt. Es ergibt sich, dass bevorzugt die Begrenzungsanordnung (34) einen gegenüber dem Rahmen 64 festgelegten Begrenzungsträger 95 mit Öffnungen 114,115 aufweist, deren Ränder 116 bis 123 Begrenzungsanschläge für an der Schiene 75 vorgesehene Begrenzungsnocken 100,101 bilden.

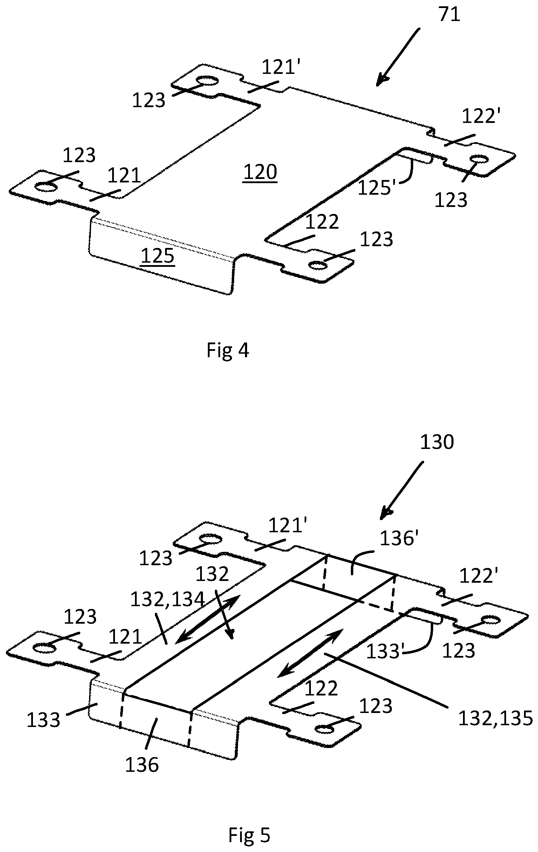

Figur 4 zeigt eine Ansicht schräg von oben auf eine Ausführungsform für einen Parallelarm 71 der Dosiereinheit 50 (Figur 3a), der aus einem elastisch deformierbaren Material wie Blech besteht, einen rechteckigen Körper 120 und im Bereich seiner vier Ecken vorgesehene, von ihm abstehende, parallel ausgerichtete, als Blattfedern 121,121', 122,122' wirkende Verbindungszungen besitzt, die endseitig mit einem Loch 123 für eine Schraube versehen sind, so dass sie am Rahmen 64, an einem vertikalen Rahmenabschnitt 70, bzw. an einem geeignet ausgebildeten Übergangsstück 140 am Behälter 54 befestigt werden können (s. Figur 3a). Dabei werden die Blattfedern 121,121' am Rahmenabschnitt 70 und die Blattfedern 122,122' am Übergangsstück 140 verschraubt. Aufgrund ihrer Dimensionierung wirken die Blattfedern 121,121', 122,122' als Gelenke für den Parallelarm 71 derart, dass sie die geforderte Vertikalbewegung des Behälters 54 betriebsfähig erlauben - wie erwähnt, hängt die Dimensionierung von der Art der verwendeten Waage ab und kann durch den Fachmann leicht geeignet vorgenommen werden. Im Fall eine Schwingsaitenwaage liegt der notwendige Vertikalweg des Behälters 54 im Bereich eines Bruchteils eines Millimeters, ist aber dennoch unerlässlich, um zu verhindern, dass nach oben gerichtete Lagerkräfte des Rahmenabschnitts 70 das von der Waage 68 gemessene Gewicht verfälschen.

Der Parallelarm 71 besitzt weiter an den zwischen den Blattfedern 121,122 und zwischen den Blattfedern 121',122' seitlich abgekantete Versteifungsbereiche 125,125', welche den Parallelarm 71 zwischen den jeweiligen Blattfedern definiert versteifen, so dass sein Körper 120 als steifer Hebel wirkt, der über die von den Blattfedern 121,121', 122,122' gebildeten Gelenke am Rahmen und am Behälter 54 angebracht ist.

Der untere Parallelarm 72 (Figur 3a) ist gleich ausgebildet wie der obere Parallelarm 71.

Es ergibt sich, dass die Parallelarme (18,19,71,72) bevorzugt als Blattfedern 121,121', 122,122' ausgebildete Gelenke aufweisen.

Figur 5 zeigt eine weitere Ausführungsform eines Parallelarms 130, der grundsätzlich gleich ausgebildet ist, wie der Parallelarm 71,72, jedoch in seinem Körper 131 eine Ausnehmung 132 aufweist, die über seine ganze Breite bis hin zu den abgekanteten Versteifungsbereichen 133,133' läuft, derart, dass der Körper 126 in zwei parallele, über die Breite des Parallelarms 130 laufende Streifen 134,135 zerfällt, die über die abgekanteten Bereiche 133,133' miteinander verbunden sind. Die in der Figur 6 gestrichelt eingegrenzten, zwischen den Streifen 134,135 liegenden Abschnitte der abgekanteten Bereiche 133,133' wirken nun als vertikale liegende Blattfedern 136,136', die eine in der Horizontalen liegende Relativverschiebung der Streifen 134,135 gemäss den eingezeichneten Doppelpfeilen ermöglichen.

Damit ermöglicht der Parallelarm 130 nicht nur die entsprechend der Waage 68 geforderte Vertikalbewegung, sondern auch eine seitliche Verschiebung des Behälters 54, wie sie etwa notwendig wird, wenn der vertikale Rahmenabschnitt 70 und die Behälterachse 35 (S. Figur 3a) nicht genau parallel, sondern etwas verschränkt sind. Dies wird zwar weniger der Fall sein bei einer Dosiereinheit 50 gemäss den Figuren 3a bis d, sondern kann vor allem dann notwendig werden, wenn der Behälter statt auf einer Waage auf zwei Waagen ruht, so dass die Auflagepunkte der zwei Waagen mit der Parallelführung eine Dreipunktauflage bilden. Dann können sich die Auflagepunkte der beiden Waagen nicht exakt auf gleicher Höhe befinden, so dass der Behälter zur Vertikalen leicht schräg geneigt und damit auch zur Parallelführung leicht schräg geneigt ist. Der Parallelarm 130 ist dann in der Lage, eine leichte seitliche Abweichung des von ihm getragenen Behälterbereichs zuzulassen.

Wiederum ist es so, dass in der Regel die seitliche Abweichung im Millimeterbereich liegt, aber je nach der Art der verwendeten Waage notwendigerweise zugelassen werden muss: Würde die Parallelführung den Behälter genau vertikal führen, wäre eine der beiden Waagen vermehrt, die andere verringert belastet, da sich der Ausgangslage gemäss die Waagen nicht auf exakt gleicher Höhe befinden. Die vermehrt belastete Waage operiert dann möglicherweise oberhalb ihres vorgesehenen Betriebsbereichs, was zu einer unerwünschten Hysterese im Messsignal führen kann, die das Messergebnis verfälscht und die Qualität der Dosierung herabsetzt.

Es ergibt sich, dass bevorzugt ein Parallelarm 18,19,71,72 weiter wenigstens ein horizontal wirkendes Gelenk aufweist, die bevorzugt als Blattfeder 136,136' ausgebildet ist weiter bevorzugt im Fall einer gravimetrischen Dosiereinheit, bei der zwei Waagen vorgesehen sind.

Es sei an dieser Stelle angemerkt, dass der Behälter auch an drei Waagen angeordnet werden kann, wobei dann eine Parallelführung entfällt, jedoch eine erfindungsgemässe Schiene 25,75 vorgesehen wird, bevorzugt mit einer Begrenzungsanordnung 34,52. Weiter sei angemerkt, dass bevorzugt die Aufhängung eine Kugelauflage aufweist, die mit einer ihr zugeordneten Waage zur Übertragung des zu wägenden Gewichts zusammenwirkt. Dabei besitzt die Waage an ihrem oberen Ende dort, wo das Gewicht aufgenommen werden soll, eine kugelförmig ausgebildete Oberfläche, die mit einer etwas weiteren, gegengleich ausgebildeten kugel- oder ellipsenförmigen Höhlung in beispielsweise einem Ausleger 13, 69' (Figur 1a,3a) zusammenwirkt und so eine leichte Seitenverschiebung des Auslegers gegenüber der Waage ermöglicht, ohne dass die präzise Gewichtsmessung beeinträchtigt wird.

Im Ganzen ergibt sich erfindungsgemäss für alle Ausführungsformen eine gravimetrische Dosiereinheit für Schüttgüter, mit einem Dosierer, der einem Behälter für zu dosierendes Schüttgut und eine Basiseinheit mit einem horizontal angeordneten Förderer für das Schüttgut aufweist, wobei Behälter und Basiseinheit für die Wartung von einander lösbar sind, mit einem Rahmen, an dem wenigstens eine Waage angeordnet ist, auf der wiederum über eine Aufhängung der Dosierer betriebsfähig abgestützt ist, derart, dass die Dosiereinheit für gravimetrische Dosierung ausgebildet ist, wobei die Aufhängung mit dem Behälter des Dosierers verbunden ist und diesen über den Behälter trägt, der Behälter seinerseits mit einer von ihm weg ragenden Schiene versehen ist, und wobei die Basiseinheit ein an der Schiene laufendes Tragwerk aufweist, derart, dass sie zwischen einer Betriebsposition und einer Wartungsposition hin- und her bewegt werden kann.

## Patentansprüche

1. Gravimetrische Dosiereinheit für Schüttgüter, mit wenigstens einer Waage (14,68), mit einer Aufhängung (12) und mit einem Dosierer (2,55), der einem Behälter (3,54) für zu dosierendes Schüttgut und eine Basiseinheit (4,73), die einen nicht vertikal angeordneten Förderer für das Schüttgut aufweist, wobei Behälter (3,54) und Basiseinheit (4,73) für die Wartung von einander lösbar sind, und mit einem Rahmen (16,64), an dem die wenigstens eine Waage (14,68) angeordnet ist, auf der wiederum über die Aufhängung (12) der Dosierer (2,55) betriebsfähig abgestützt ist, derart, dass die Dosiereinheit (1,50) für gravimetrische Dosierung ausgebildet ist, **dadurch gekennzeichnet, dass** die Aufhängung (12) mit dem Behälter (3,54) des Dosierers (2,55) verbunden ist und diesen über seinen Behälter (2,54) trägt, der Behälter (2,54) seinerseits mit einer von ihm weg ragenden Schiene (25,75) versehen ist, und dass die Basiseinheit (4,73) ein an der Schiene (25,75) laufendes Tragwerk (28, 83) aufweist, derart, dass sie zwischen einer Betriebsposition und einer Wartungsposition hin- und her bewegt werden kann.

2. Gravimetrische Dosiereinheit nach Anspruch 1, wobei am Rahmen (16) eine Begrenzungsanordnung (34) vorgesehen ist, die eine Verdrehung des Behälters (3) gegenüber dem Rahmen (16) um eine vertikale Achse begrenzt.

3. Gravimetrische Dosiereinheit nach Anspruch 1, wobei die Begrenzungsanordnung (34) mit dem Rahmen (16) verbundene Anschläge (33,33') aufweist, die mit der Schiene (25) zusammenwirken.

4. Gravimetrische Dosiereinheit nach Anspruch 1, wobei die Schiene (25) in vertikaler Richtung federelastisch ausgebildet und am Rahmen (16) eine Stütze (32) vorgesehen ist, auf dem die Schiene (25) bei nach unten gerichteter federelastischer Auslenkung aufliegt, derart, dass die Schiene (25) auf der Stütze (32) aufliegt, wenn sich die Basiseinheit (4) in der Wartungsposition befindet, aber auf der Stütze (32) nicht aufliegt, wenn sich die Basiseinheit (4) in Betriebsposition befindet.

5. Gravimetrische Dosiereinheit nach Anspruch 1, wobei die Schiene (41) mehrteilig ausgebildet ist, wobei ein behälterseitiger Teil (42) mit dem Behälter (3) und ein rahmenseitiger Teil (44) mit dem Rahmen (16) verbunden ist, und wobei die Teile (42,44) der Schiene (41) relativ bewegbar zueinander miteinander fluchten, derart, dass das Tragwerk (28) über einen Zwischenraum (45) zwischen den fluchtenden Enden bewegt werden kann.

6. Gravimetrische Dosiereinheit nach Anspruch 5 oder 1, wobei die Begrenzungsanordnung (34) seitliche, miteinander zusammenwirkende Anschläge an fluchtenden Enden der der Schiene (41) aufweist, bevorzugt wechselweise ineinandergreifende Vorsprünge (47) oder Zacken (46).

7. Gravimetrische Dosiereinheit nach Anspruch 1, wobei die Schiene (75) einen sich vom Behälter (54) weg erstreckenden Abschnitt (82) und einen anschliessenden, zum ersten abgewinkelten zweiten Abschnitt (81) aufweist.

8. Gravimetrische Dosiereinheit nach Anspruch 1, wobei die Schiene als Doppelschiene ausgebildet ist mit zwei seitlich nebeneinander verlaufenden Einzelschienen, die im Abstand zueinander angeordnet sind.

9. Gravimetrische Dosiereinheit nach Anspruch 1, wobei die Aufhängung (12) eine Parallelführung (17) mit Parallelarmen (18,19,71,72) aufweist, die einerseits mit dem Rahmen (16) und andererseits mit dem Behälter (3) verbunden ist, derart, dass der Behälter (3) gegenüber dem Rahmen (16) vertikal bewegbar aufgehängt ist.

10. Gravimetrische Dosiereinheit nach Anspruch 1, wobei die Begrenzungsanordnung (34) einen gegenüber dem Rahmen festgelegten Begrenzungsträger (95) mit Öffnungen (114,115) aufweist, deren Ränder (116 bis 123) Begrenzungsanschläge für an der Schiene (75) vorgesehene Begrenzungsnocken (104,105) bilden.

11. Gravimetrische Dosiereinheit nach Anspruch 9, wobei die Parallelarme (18,19,71,72) als Blattfedern (121,121', 122,122') ausgebildete Gelenke aufweisen.

12. Gravimetrische Dosiereinheit nach Anspruch 9, wobei ein Parallelarm (18,19,71,72) weiter wenigstens ein horizontal wirkendes Gelenk aufweist, die bevorzugt als Blattfeder (136,136') ausgebildet ist.

13. Gravimetrische Dosiereinheit nach Anspruch 1, wobei das Tragwerk (83) derart ausgebildet ist, dass es eine Verdrehung der Basiseinheit (73) gegenüber der Schiene (75) erlaubt.

14. Gravimetrische Dosiereinheit nach Anspruch 8 und 12, wobei das Tragwerk (83) einen zwischen den Einzelschienen (85,86) hindurchragenden Mast (89) und weiter bevorzugt eine auf den Einzelschienen (85,86) aufliegende Gleitscheibe (89) aufweist.

15. Gravimetrische Dosiereinheit nach Anspruch 1, wobei zwei Waagen vorgesehen sind.

16. Gravimetrische Dosiereinheit nach Anspruch 1, wobei drei Waagen vorgesehen sind.

17. Gravimetrische Dosiereinheit nach Anspruch 1, wobei die Aufhängung eine Kugelauflage aufweist, die mit einer ihr zugeordneten Waage zur Übertragung des zu wägenden Gewichts zusammenwirkt.

## Claims

1. Gravimetric dosing unit for bulk materials, with at least one weighing device (14,68), with a suspension (12) and with a dosing device (2,55) which has a container (3,54) for the bulk material to be dosed and a base unit (4,73) which has a conveyor for the bulk material that is not arranged vertically, whereby the container (3,54) and base unit (4,73) being detachable from one another for maintenance purposes, and with a frame (16,64) on which the at least one weighing device (14,68) is arranged, on which in turn the dosing device (2,55) is operatively supported via the suspension (12) in such a way that the dosing unit (1,50) is designed for gravimetric dosing, **characterised in that** the suspension (12) is connected to the container (3,54) of the dosing unit (2,55) and supports it via its container (2,54), the container (2,54) in turn is provided with a rail (25,75) projecting away from it, and that the base unit (4,73) has a support structure (28,83) running on the rail (25,75) in such a way that it can be moved back and forth between an operating position and a maintenance position.

2. Gravimetric dosing unit according to claim 1, wherein a limiting arrangement (34) is provided on the frame (16), which limits the rotation of the container (3) relative to the frame (16) about a vertical axis.

3. Gravimetric dosing unit according to claim 1, wherein the limiting arrangement (34) has stops (33,33') connected to the frame (16) which interact with the rail (25).

4. Gravimetric dosing unit according to claim 1, wherein the rail (25) is designed to be spring-elastic in the vertical direction and a support (32) is provided on the frame (16) on which the rail (25) rests when deflected downwards in a spring-elastic manner, such that the rail (25) rests on the support (32) when the base unit (4) is in the maintenance position, but does not rest on the support (32) when the base unit (4) is in the operating position.

5. Gravimetric dosing unit according to claim 1, wherein the rail (41) is designed in multiple parts, wherein a container-side part (42) is connected to the container (3) and a frame-side part (44) is connected to the frame (16), and wherein the parts (42,44) of the rail (41) are aligned with each other in a relatively movable manner such that the supporting structure (28) can be moved via a gap (45) between the aligned ends.

6. Gravimetric dosing unit according to claim 5 or 1, wherein the limiting arrangement (34) has lateral stops cooperating with each other at aligned ends of the rail (41), preferably alternately interlocking projections (47) or teeth (46).

7. Gravimetric dosing unit according to claim 1, wherein the rail (75) has a section (82) extending away from the container (54) and a second section (81) adjoining it and angled relative to the first section.

8. Gravimetric dosing unit according to claim 1, wherein the rail is designed as a double rail with two individual rails running side by side, which are arranged at a distance from each other.

9. Gravimetric dosing unit according to claim 1, wherein the suspension (12) has a parallel guide (17) with parallel arms (18,19,71,72) connected on one side to the frame (16) and on the other side to the container (3) in such a way that the container (3) is suspended so as to be vertically movable relative to the frame (16).

10. Gravimetric dosing unit according to claim 1, wherein the limiting arrangement (34) comprises a limiting carrier (95) fixed relative to the frame, with openings (114,115) whose edges (116 to 123) form limiting stops for limiting cams (104,105) provided on the rail (75).

11. Gravimetric dosing unit according to claim 9, wherein the parallel arms (18,19,71,72) have joints designed as leaf springs (121,121',122,122').

12. Gravimetric dosing unit according to claim 9, wherein a parallel arm (18,19,71,72) further comprises at least one horizontally acting joint, which is preferably designed as a leaf spring (136,136').

13. Gravimetric dosing unit according to claim 1, wherein the support structure (83) is designed in such a way that it allows the base unit (73) to rotate relative to the rail (75).

14. Gravimetric dosing unit according to claims 8 and 12, wherein the supporting structure (83) comprises a mast (87) passing between the individual rails (85,86) and, further preferably, a sliding disc (89) resting on the individual rails (85,86).

15. Gravimetric dosing unit according to claim 1, wherein two weighing devices are provided.

16. Gravimetric dosing unit according to claim 1, wherein three weighing devices are provided.

17. Gravimetric dosing unit according to claim 1, wherein the suspension has a ball support which interacts with an associated weighing device to transmit the weight to be weighed.

## Revendications

1. Unité de dosage gravimétrique pour produits en vrac, comprenant au moins une balance (14,68) avec une suspension (12) et avec un doseur (2,55) qui comprend un récipient (3,54) pour le produit en vrac à doser et une unité de base (4,73) qui présente un convoyeur non disposé verticalement pour le produit en vrac, le récipient (3,54) et l'unité de base (4,73) pouvant être séparés l'un de l'autre pour la maintenance, et avec un châssis (16,64) sur lequel est disposée au moins une balance (14,68) sur laquelle, à son tour, le doseur (2,55) est supporté de manière opérationnelle via la suspension (12), de telle sorte que l'unité de dosage (1,50) est conçue pour le dosage gravimétrique, **caractérisé en ce que** la suspension (12) est reliée au récipient (3,54) du doseur (2,55) et le supporte par l'intermédiaire de son récipient (2,54), le récipient (2,54) étant pour sa part muni d'un rail (25,75) qui en dépasse, et **en ce que** l'unité de base (4,73) comporte une structure porteuse (28,83) se déplaçant sur le rail (25,75), de telle sorte qu'elle peut être déplacée entre une position de fonctionnement et une position de maintenance.

2. Unité de dosage gravimétrique selon la revendication 1, dans laquelle un dispositif de limitation (34) est prévu sur le châssis (16), lequel limite la rotation du récipient (3) par rapport au châssis (16) autour d'un axe vertical.

3. Unité de dosage gravimétrique selon la revendication 1, dans laquelle le dispositif de limitation (34) comporte des butées (33,33') reliées au cadre (16) qui coopèrent avec le rail (25).

4. Unité de dosage gravimétrique selon la revendication 1, dans laquelle le rail (25) est conçu de manière élastique dans le sens vertical et un support (32) est prévu sur le châssis (16), sur lequel repose le rail (25) en cas de déviation élastique vers le bas, de telle sorte que le rail (25) repose sur le support (32) lorsque l'unité de base (4) se trouve dans la position d'entretien, mais ne repose pas sur le support (32) lorsque l'unité de base (4) se trouve dans la position de fonctionnement.

5. Unité de dosage gravimétrique selon la revendication 1, dans laquelle le rail (41) est constitué de plusieurs parties, une partie côté réservoir (42) étant reliée au réservoir (3) et une partie côté châssis (44) est reliée au châssis (16), et les parties (42,44) du rail (41) sont alignées de manière à pouvoir se déplacer l'une par rapport à l'autre, de telle sorte que la structure porteuse (28) puisse être déplacée via un espace intermédiaire (45) entre les extrémités alignées.

6. Unité de dosage gravimétrique selon la revendication 5 ou 1, dans laquelle le dispositif de limitation (34) comporte des butées latérales coopérant entre elles aux extrémités alignées du rail (41), de préférence des saillies (47) ou des dents (46) s'engrenant alternativement.

7. Unité de dosage gravimétrique selon la revendication 1, dans laquelle le rail (75) comporte une partie (82) s'étendant à partir du récipient (54) et une deuxième partie (81) adjacente, coudée par rapport à la première.

8. Unité de dosage gravimétrique selon la revendication 1, dans laquelle le rail est conçu comme un rail double avec deux rails individuels disposés côte à côte, qui sont espacés l'un de l'autre.

9. Unité de dosage gravimétrique selon la revendication 1, dans laquelle la suspension (12) comporte un guidage parallèle (17) avec des bras parallèles (18,19,71,72) qui sont reliés d'une part au châssis (16) et d'autre part au récipient (3), de telle sorte que le récipient (3) est suspendu de manière à pouvoir se déplacer verticalement par rapport au châssis (16).

10. Unité de dosage gravimétrique selon la revendication 1, dans laquelle le dispositif de limitation (34) comprend un support de limitation (95) fixé par rapport au cadre et muni d'ouvertures (114,115) dont les bords (116 à 123) forment des butées de limitation pour des cames de limitation (104,105) prévues sur le rail (75).

11. Unité de dosage gravimétrique selon la revendication 9, dans laquelle les bras parallèles (18,19,71,72) comportent des articulations conçues comme des ressorts à lames (121,121',122,122').

12. Unité de dosage gravimétrique selon la revendication 9, dans laquelle un bras parallèle (18,19,71,72) comporte en outre au moins une articulation agissant horizontalement, qui est de préférence réalisée sous la forme d'un ressort à lame (136,136').

13. Unité de dosage gravimétrique selon la revendication 1, dans laquelle la structure porteuse (83) est conçue de manière à permettre une rotation de l'unité de base (73) par rapport au rail (75).

14. Unité de dosage gravimétrique selon les revendications 8 et 12, dans laquelle la structure porteuse (83) comprend un mât (87) passant entre les rails individuels (85,86) et, de préférence, un disque coulissant (89) reposant sur les rails individuels (85,86).

15. Unité de dosage gravimétrique selon la revendication 1, dans laquelle deux balances sont prévues.

16. Unité de dosage gravimétrique selon la revendication 1, dans laquelle trois balances sont prévues.

17. Unité de dosage gravimétrique selon la revendication 1, dans laquelle la suspension comporte un support sphérique qui coopère avec une balance qui lui est associée pour transmettre le poids à peser.
